# EUROPÄISCHE PATENTSCHRIFT

(11) **EP 1 482 195 B1**
(45) Veröffentlichungstag und Bekanntmachung des Hinweises auf die Patenterteilung: **03.08.2011**
(21) Anmeldenummer: 04011902.6
(22) Anmeldetag: 19.05.2004
(51) Int. Cl.: F16D 48/06, F16D 25/0638, F16D 25/12

(54) **Kupplungsvorrichtung und Verfahren zum Betreiben einer Lamellenkupplung**
Coupling device and method of operating a multi-disk clutch
Dispositif d'accouplement et procédé d'utilisation d'un embrayage multidisques

(30) Priorität: 24.05.2003 DE 10323515
(43) Veröffentlichungstag der Anmeldung: 01.12.2004
(73) Patentinhaber: Dr. Ing. h.c. F. Porsche AG, 70435 Stuttgart (DE)
(72) Erfinder: Hoebel, Peter, Dipl.-Ing. (FH), 75242 Neuhausen (DE)

(56) Entgegenhaltungen:
- EP-A- 0 421 141
- EP-A- 0 715 089
- US-A- 5 224 578
- US-B1- 6 401 896
- US-B1- 6 508 337

## Beschreibung

Die Erfindung betrifft eine Kupplungsvorrichtung sowie ein Verfahren zum Betreiben einer Lamellenkupplung gemäß den Merkmalen der Oberbegriffe der Ansprüche 1 und 4. Ein gattungsgemäßes Verfahren ist aus EP-A2-0 715 089 bekannt.

Bei Automatikgetrieben oder automatisierten Schaltgetrieben, wie z. B. einem Doppelkupplungsgetriebe werden der eigentlichen Getriebeeinheit sog. hydrodynamische Drehmomentwandler vorgeschaltet, die u. a. ein komfortables Anfahren des Kraftfahrzeuges ermöglichen. Der Einsatz von Drehmomentwandlern ist aber mit einem Wirkungsgradverlust verbunden, weshalb in der Regel zusätzlich noch eine Überbrückungskupplung erforderlich wird. Bei der Verwendung von hilfskraftbetätigten, nasslaufenden Lamellenkupplungen, die beispielsweise auch in Doppelkupplungsgetrieben eingesetzt werden, besteht das Problem, dass derartige Kupplungen in der Phase geringer Gleitgeschwindigkeit zu einem ungleichmäßigen Eingriffsverhalten neigen und die Ansteuerung einen verhältnismäßig hohen Aufwand bezüglich des feinfühligen Einregelns des Anpressdrucks erfordert.

Aufgabe der Erfindung ist es daher, Maßnahmen vorzusehen, durch die insbesondere bei der Verwendung von zwischen Motor und Getriebe angeordneten hilfskraftbetätigten nasslaufenden Lammelenkupplungen eines Kraftfahrzeuges ein entsprechender Anfahrkomfort erreichbar ist.

Die Aufgabe wird durch die im Anspruch 1 und 4 angegebenen Merkmale gelöst.

Mit dem Vorschlag, bei zumindest teilweise geöffneter bzw. ausgerückter Kupplung gezielt Öl zwischen die Kupplungsscheiben zu fördern, ist ein Schleppmoment erzeugbar, das z.B. bei einer hilfskraftbetätigten Nasskupplung ein kontrolliertes Anfahren ermöglicht. Damit kann auf zusätzliche Bauteile, wie z. B. Drehmomentwandler, verzichtet werden, woraus sich entsprechende Package,- Gewichts,- und Kostenvorteile ergeben.

Durch die in den vom Anspruch 1 abhängigen Ansprüchen aufgeführten Maßnahmen sind weitere vorteilhafte Ausgestaltungen des Verfahrens möglich.

Das bei einer nasslaufenden Lamellenkupplung für die Kühlung der Lamellen vorgesehene Schmieröl kann auf vorteilhafte Art und Weise gleichzeitig zur Erzeugung des Anfahr - Schleppmomentes genutzt werden, so dass keine zusätzlichen Einrichtungen, wie z. B. Ölförderpumpen, Ölkanäle etc. erforderlich sind.

Um einen ausreichenden Ölvolumenstrom zum Aufbau des Anfahr - Schleppmomentes bereit stellen zu können, erfolgt die Zufuhr des Öls unabhängig vom Betriebszustand und der Temperatur der Kupplung.

Eine auf den gleichen Grundgedanken basierende zweite Ausführungsform einer Kupplungseinrichtung gemäß den Merkmalen des Anspruchs 4 zeichnet sich dadurch aus, dass ein Teil der mit dem Innen- und Aussenträger der Kupplung drehfest verbundenen Lamellen unabhängig vom Betriebszustand der Kupplung bzw. des Fahrzeuges auf Abstand zueinander gehalten sind. Damit kann bei der gezielten Zufuhr von Öl in die Zwischenräume der mit den Innen- bzw. Aussenträger verbundenen Lamellen ebenfalls das gewünschte Anfahr- Schleppmoment erzeugt werden.

In den Unteransprüchen 5 bis 7 sind weitere vorteilhafte Ausgestaltungen und Verbesserungen der erfindungsgemäßen Kupplungseinrichtung enthalten.

Auf vorteilhafte Art und Weise sind die mit dem äußeren Lamellenträger drehfest verbundenen Lamellen durch Abstandshalter voneinander beabstandet, die sich an den mit dem inneren Lamellenträger drehfest verbundenen Lamellen abstützen, während letztere axial gesichert und durch Distanzringe beabstandet sind.

Das Lamellenpaket kann auch als separate Baueinheit ausgebildet sein, das modulartig in der Kupplungseinrichtung integriert ist.

Die Kupplungseinheit zeichnet sich weiterhin dadurch aus, dass die fest voneinander beabstandeten Lamellen mit dem Aufbau eines Schleppmomentes begünstigenden Öffnungen, Vertiefungen, Kanten o. ä. versehen sind.

Zwei Ausführungsbeispiele der Erfindung sind in der nachfolgenden Beschreibung und Zeichnung näher erläutert.

Es zeigen:
- Fig. 1: das Funktionsschema einer hydraulisch betätigten Nasskupplung,
- Fig. 2: eine Teilschnittdarstellung einer hydraulisch betätigbaren Kupplung für ein Doppelkupplungsgetriebe,

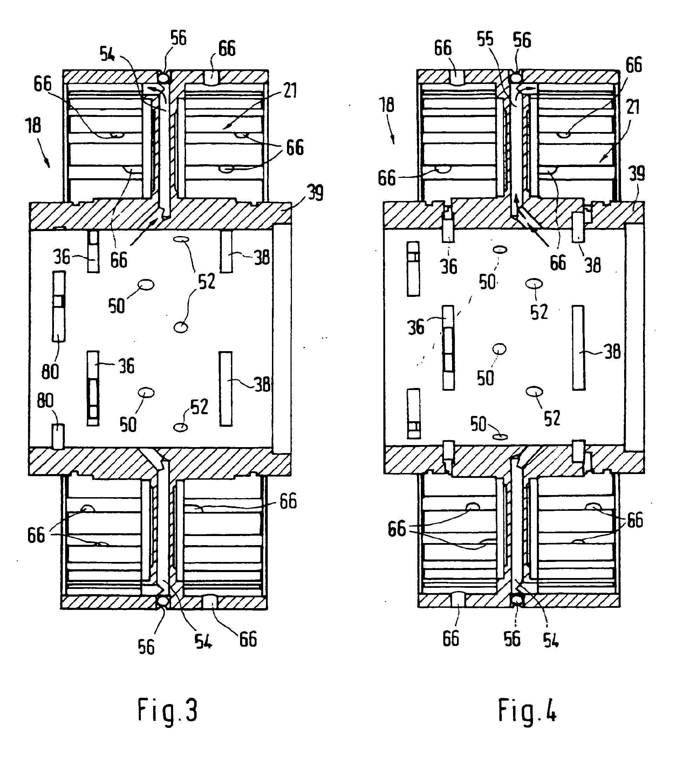

- Fig. 3: einen ersten Längsschnitt durch einen Lamellenträger der Kupplung,
- Fig. 4: einen zweiten Längsschnitt durch den Lamellenträger,
- Fig. 5: eine Teilansicht einer zweiten Ausführungsform einer Lamellenkupplung und
- Fig. 6: eine Teildarstellung eines Lamellenpaketes

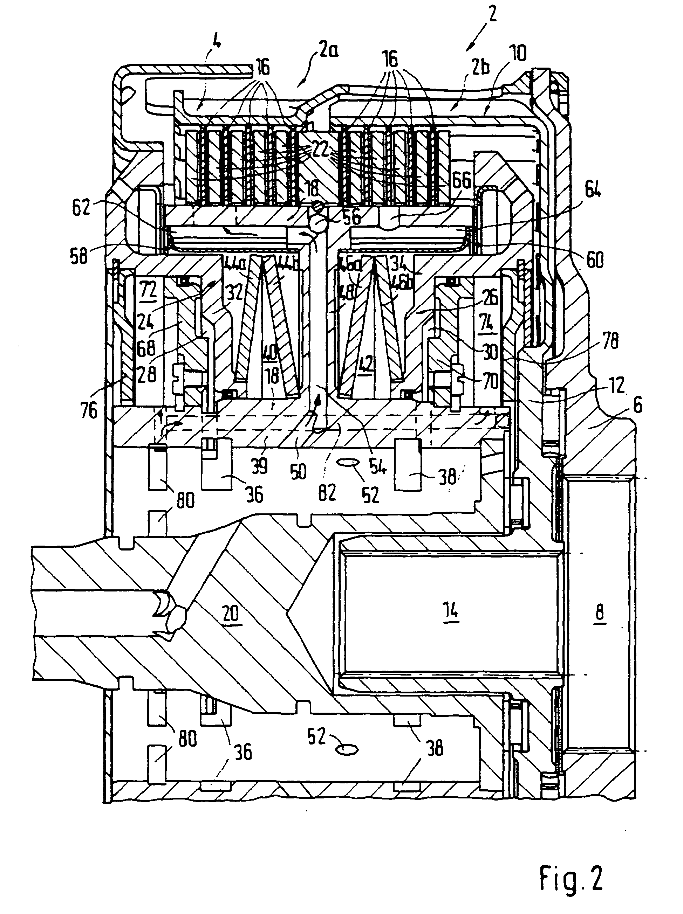

In Fig. 2 ist eine nicht auf die Erfindung eingeschränkte Ausführungsform einer Lamellenkupplung 2 dargestellt, die mit zwei getrennten Kupplungseinheiten 2a und 2b beispielsweise in einem Doppelkupplungsgetriebe zwischen dem Motor und der Getriebeeinheit eines Kraftfahrzeuges Aufnahme findet.

Im folgenden sind die wesentlichen Bauteile der Lamellenkupplung 2 beschrieben. Sie besteht aus einem äußerem Kupplungskorb 4, dessen stirnseitig angeordnete Mitnehmerscheibe bzw. Nabe 6 über eine zentrale innenverzahnte Öffnung 8 mit einer nicht dargestellten ersten Getriebeeingangswelle verbunden ist. Diese beispielsweise als Hohlwelle ausgebildete erste Getriebeeingangswelle trägt die Zahnräder für die geraden Gänge des Doppelkupplungsgetriebes. Ein zweiter, innerer Kupplungskorb 10 weist eine Mitnehmerscheibe bzw. Nabe 12 auf, die ebenfalls mit einer innenverzahnten, zentralen Öffnung 14 versehen ist. In die innenverzahnte Nabe 12 ist eine zweite, nicht dargestellte Getriebeeingangswelle aufgenommen, die beispielsweise als Vollwelle koaxial zur ersten Getriebeeingangswelle verläuft und die Zahnräder für die ungeraden Gänge des Doppelkupplungsgetriebes trägt. Im äußeren und inneren Kupplungskorb 4, 10 sind außenverzahnte Scheiben bzw. Lamellen 16 aufgenommem, die in entsprechende Nuten des äußeren und inneren Kupplungskorbes 4, 10 eingreifen. Darüber hinaus ist für beide Kupplungseinheiten 2a und 2b ein gemeinsamer Lamellenträger 18 vorgesehen, der mit einer motorseitig angebundenen Welle 20 drehfest verbunden ist. Der Lamellenträger 18 weist entsprechende Außenverzahnungen 21 auf, in die getriebene innenverzahnte Scheiben bzw. Lamellen 22 eingreifen. Beide Kupplungseinheiten 2a und 2b werden über eine hydraulische Betätigungseinrichtung gesteuert. Dazu sind zwei für beide Kupplungseinheiten 2a und 2b identisch ausgebildete Kolben/Zylindereinheiten 24 und 26 vorgesehen, deren Druckräume 28, 30 zum Betätigen der Kolben 32 und 34 über entsprechende Ölkanäle 36 und 38 mit Drucköl versorgt werden. Die Ölkanäle 36, 38 sind als sichelförmige Ausnehmungen radial verteilt in der Nabe 39 des Lamellenträgers 18 ausgebildet. In den den Druckräumen 28 und 30 gegenüberliegenden zwei Räumen 40 und 42 sind Federelemente 44 und 46 (jeweils zwei Scheibenfedern 44a,44b bzw. 46a, 46b) angeordnet, die bei nicht betätigten Kolben 32 und 34 beide Kupplungseinheiten 2a und 2b geöffnet halten, so dass zwischen Motor und Getriebe keine Wirkverbindung besteht. Zur Kühlung der Lamellen 16, 22 der beiden Kupplungseinheiten 2a und 2b sind in der Nabe 39 des Lamellenträgers 18 jeweils mehrere radial um den Umfang verteilt angeordnete Ölbohrungen 50 und 52 vorgesehen, die das über eine nicht dargestellte Ölpumpe geförderte Schmieröl über mehrere im umlaufenden Steg 48 des Lamellenträgers 18 ausgebildete Ölkanäle 54 und 55 den Lamellen 16, 22 beider Kupplungseinheiten 2a und 2b gezielt zuführen. Die aus fertigungstechnischen Gründen offen ausgebildeten Ölkanäle 54 sind an ihren radialen Enden mit einem Stopfen 56 verschlossen. Für die gezielte Ölzufuhr zu den Lamellen 16, 22 sind weiterhin auf der Mantelinnenseite des Lamellenträgers 18 für jede Kupplungseinheit 2a, 2b mit einem umlaufenden Kragen versehene Ölführungsbleche 58, 60 am Lamellenträger 18 befestigt. Dadurch bildet sich für jede Kupplungseinheit 2a, 2b ein um den Umfang des zylinderförmigen Lamellenträger- Bauteils 18 geschlossener Ringkanal 62 und 64 aus, der mit den Ölkanälen 54 bzw. 55 verbunden ist. Auf der gesamten Mantelfläche des Lamellenträgers 18 sind mit den beiden Ringkanälen 62 und 64 verbundene Bohrungen 66 eingebracht, über die den Lamellen 16, 22 schlussendlich das Öl zugeführt wird. In den Mantelflächen des äußeren und des inneren Kupplungskorbes 4, 10 sind ebenfalls um den gesamten Umfang verteilt angeordnete Bohrungen (nicht dargestellt) vorgesehen, über die das Schmieröl wieder in einen Ölsumpf zurück geführt werden kann.

Die beiden Druckräume 28 und 30 werden seitlich von jeweils einem auf der Nabe 39 befestigten Träger- und Führungselement 68 und 70 für die Kolben 32 und 34 begrenzt. Den beiden Druckräumen 28 und 30 liegen -getrennt von den Trägerelementen 68, 70-zwei Druckausgleichskammern 72 und 74 gegenüber, die auf ihrer anderen Seite durch zwei an den Kolben 32 und 34 befestigten Ringblechen 76 und 78 begrenzt sind. Den beiden Druckausgleichskammern 72 und 74 ist Öl über in der Nabe 39 eingebrachte radiale Ölkanäle 80 sowie axial verlaufende Ölkanäle 82 zuführbar. Durch die Druckausgleichskammern 72 und 74 können auf die Kolben 32 und 34 wirkende Fliehkräfte, die durch das in den Druckräumen 28 bzw. 30 befindliche Öl erzeugt werden, kompensiert werden.

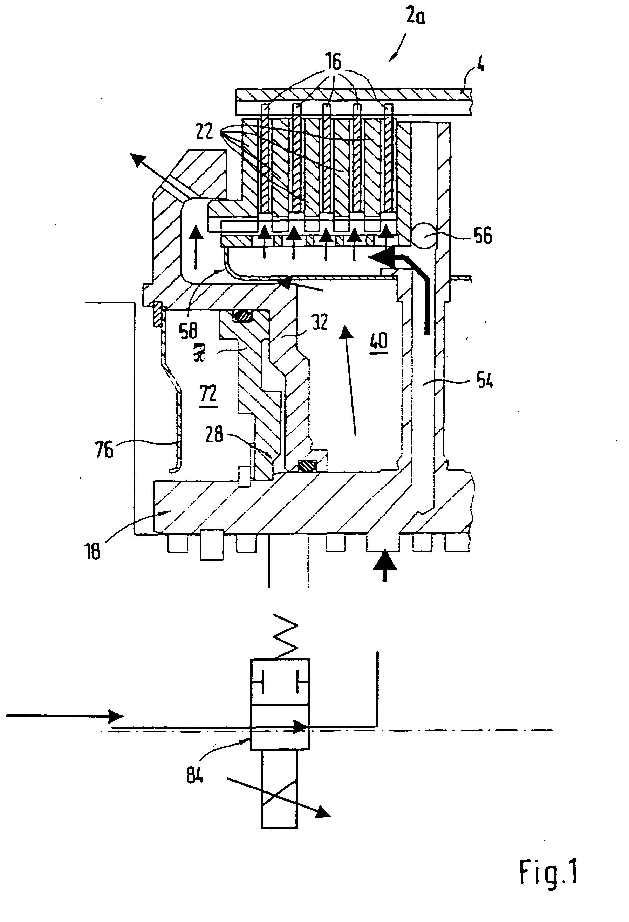

Zum Anfahren des Fahrzeuges wird die Lamellenkupplung 2 wie folgt betrieben (siehe Fig. 1) : Beim Anfahren beispielsweise mit dem 2. Gang wird der sich im geöffneten Zustand befindlichen ersten Kupplungseinheit 2a (auch Kupplungseinheit 2b ist ausgerückt) mit Hilfe eines den Ölvolumenstrom regelbaren Ventils 84 Öl zugeführt. Das sich zwischen die Lamellen 16 und 22 verteilende Öl erzeugt ein Anfahr- Schleppmoment, mit dem das Fahrzeug aus dem Stand kontrolliert und ruckfrei angefahren werden kann. Durch die Regelbarkeit des Ölvolumenstroms kann der in der Kupplungseinheit 2a aufgebaute Öldruck für das Anfahr- Schleppmoment entsprechend den aktuell vorliegenden Bedingungen (Beladung des Fahrzeuges, Berganfahrt etc.) angepasst werden. Sobald sich das Fahrzeug in Bewegung befindet, kann die Kupplungseinheit 2a eingerückt bzw. geschlossen werden, indem durch eine Ölzufuhr zum Druckraum 28 der Kolben 32 entgegen der Kraft des Federelementes 44 verstellt wird. Nunmehr wird das anfänglich zum Aufbau des Schleppmomentes genutzte Öl als Kühlöl verwendet, das der geschlossenen Kupplungseinheit 2a zugeführt wird. Der Kühlöl- Volumenstrom wird dabei in Abhängigkeit vom Betriebszustand (Temperatur, Last etc.) der Kupplungseinheit 2a geregelt. Das zuvor beschriebene Anfahren des Fahrzeuges erfolgt mit dem ersten Gang auf die selbe Art und Weise über die Kupplungseinheit 2b.

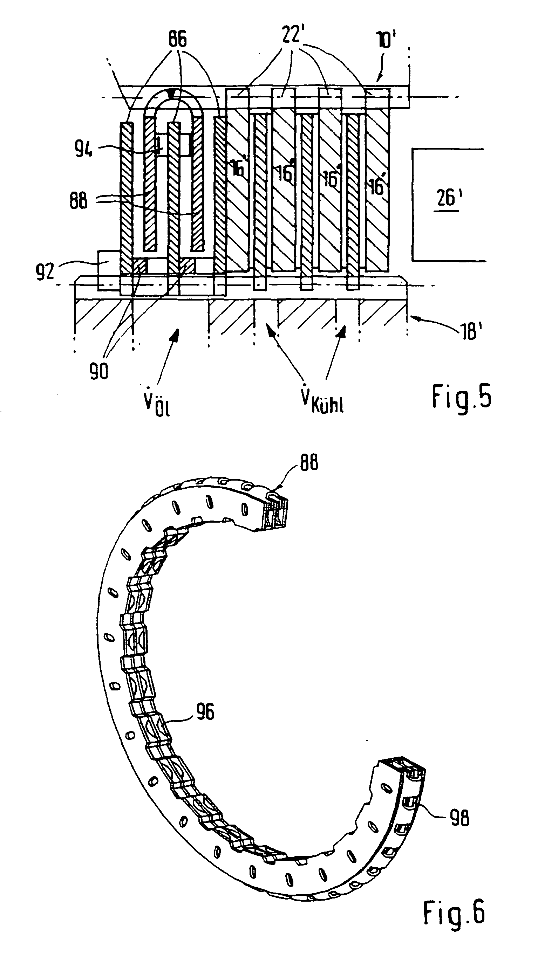

Bei der in Fig. 5 nur schematisch dargestellten zweiten Ausführungsform einer Kupplungseinrichtung, bei der nur die für die Funktion wesentlichen Bauteile beschrieben und dargestellt sind, wird ebenfalls das gewünschte Anfahr- Schleppmoment durch die gezielte Zufuhr von Öl zwischen fest voneinander beabstandete Lamellen 86 und 88 erzeugt. Dabei sind die mit dem inneren Lamellenträger 18' drehfest verbundenen Lamellen 86 durch Distanzringe 90 auf Abstand gehalten und zwischen der End-Reiblamelle 16' der "normal" öffnenden und schliessenden Kupplungseinheit 2' und einem Sicherungsring axial eingespannt. Die mit dem äußeren Lamellenträger 10' (Kupplungskorb) drehfest verbundenen Lamellen 88 greifen kammartig unter Beibehaltung eines entsprechenden Zwischenraumes in die Lamellen 86 ein, wobei zur Abstützung der Lamellen 88 an den Lamellen 86 entsprechende Abstandshalter 94 vorgesehen sind. Die aussenverzahnten Lamellen 88 sind darüber hinaus im Bereich des äusseren Lamellenträgers 10' formschlüssig, z.B. durch Schweissen, miteinander verbunden.

Analog zum ersten Ausführungsbeispiel kann durch die gezielte Zufuhr von Öl in die zwischen den fest beabstandeten Lamellen 86 und 88 sich ausbildenden Zwischenräume ein Schleppmoment erzeugt werden, das ein kontrolliertes Anfahren des Fahrzeuges ermöglicht. Auch hier ist über die Steuerung des dem Lamellenpakets zugeführten Ölvolumenstroms die in Abhängigkeit vom Betriebszustand des Kraftfahrzeugs erforderliche Höhe des Schleppmoments einstellbar. Nachdem dem das Fahrzeug aus dem Stand bewegt wurde, wird die Ölzufuhr abgestellt und die "normale" Kupplungseinheit in den eingerückten Zustand überführt.

Der zum Anfahren des Fahrzeuges erforderliche Aufbau eines Schleppmomentes kann durch konstruktive Ausgestaltungen der Lamellen 86, 88 bzw. der Abstandshalter 94 weiter begünstigt werden. Beispielsweise kann, wie in Fig. 6 dargestellt, mit Hilfe von radialen Öffnungen 96 in den Abstandshaltern 94 und radialen Öffnungen 98 in den Lamellen 88 sowie axialen Öffnungen 100 in den Lamellen 86, 88 der Strömungswiderstand in Umfangsrichtung erhöht werden.

## Patentansprüche

1. Verfahren zum Betreiben einer Lamellenkupplung, die zwischen Motor und Getriebe eines Kraftfahrzeuges angeordnet ist, mit mehreren Kupplungsscheiben, die im Wechsel als außen- und innenverzahnte Lamellen bzw. Scheiben (16, 22) an einem Innen- bzw. Außenlamallenträger (4, 10, 18) drehfest aufgenommen sind, wobei die Lamellen zur Kühlung der Kupplung mit Schmieröl versorgt werden, und dass die außen- und innenverzahnten Kupplungslamellen (16, 22) zur Herstellung eines Kraftflusses zwischen Motor und Getriebe über eine Hydraulikmechanismus betätigt werden,
**dadurch gekennzeichnet, dass**
- zum Anfahren des Kraftfahrzeugs ein Schleppmoment erzeugt wird, in dem eine gezielte Zufuhr von Öl zwischen die Kupplungsscheiben (16, 22) der zumindest teilweise geöffneten Kupplung erfolgt, wobei
- ein Ölvolumenstrom derart eingestellt wird, dass durch einen in der Kupplung (2) aufgebauten Öldruck ein bestimmtes Anfahr- bzw. Schleppmoment erzeugt wird, und die Regelung des Ölvolumenstromes unabhängig vom Betriebszustand und der Temperatur der Kupplung (2) stattfindet.

2. Verfahren nach Anspruch 1, **dadurch gekennzeichnet, dass** zum Aufbau des Schleppmomentes das für die Kühlung der Lamellen (16, 22) vorgesehene Schmieröl verwendet wird.

3. Verfahren nach Anspruch 1 oder 2, **dadurch gekennzeichnet, dass** zur Anpassung des Schleppmoments der zwischen die Kupplungslamellen (16, 22) geförderte Ölvolumenstrom regelbar ist.

4. Kupplungsvorrichtung für ein Kraftfahrzeug, die zwischen Motor und Getriebe angeordnetet sein kann, mit mehreren nasslaufenden Kupplungsscheiben (16, 22), die im Wechsel als außen- und innenverzahnte Lamellen bzw. Scheiben an einem Innen- bzw. Außenlamellenträger (10', 18') drehfest aufgenommen sind, sowie mit einem Hydraulikmechanismus (26') zum Betätigen der Kupplung (2),
**dadurch gekennzeichnet, dass**
zusätzlich zwischen Innen- und Aussenlamellenträger wechselseitig drehfest mit den beiden Lamellenträgern (10', 18') verbundene Scheiben bzw. Lamellen (86, 88) vorgesehen sind, die unabhängig vom Betriebszustand der Kupplung auf Abstand zueinander gehalten sind und zwischen die zur Erzeugung eines Anfahr- Schleppmomentes Öl gefördert werden kann, wobei
über die Steuerung des den Lamellen (86, 88) zugeführten Ölvolumenstroms die in Abhängigkeit vom Betriebszustand des Kraftfahrzeugs erforderliche Höhe des Schleppmoments einstellbar ist.

5. Kupplungsvorrichtung nach Anspruch 4, **dadurch gekennzeichnet, dass** sich die aussenverzahnten Lamellen (88) über Abstandshalter (94) an den innenverzahnten Lamellen (86) abstützen.

6. Kupplungsvorrichtung nach Anspruch 4 oder 5, **dadurch gekennzeichnet, dass** die innenverzahnten Lamellen (86) auf dem Lamellenträger (18') axial gesichert und durch Distanzringe (90) beabstandet sind.

7. Kupplungsvorrichtung nach einem der Ansprüche 4 bis 6, **dadurch gekennzeichnet, dass** die fest zueinander beabstandeten innen- und aussenverzahnten Lamellen (86, 88) als separate Baueinheit ausgebildet sind.

## Claims

1. Method for operating a multiplate clutch which is arranged between an engine and a transmission of a motor vehicle, having a plurality of clutch discs which, in an alternating fashion as externally toothed and internally toothed plates or discs (16, 22), are held on an inner and an outer plate carrier (4, 10, 18) for conjoint rotation therewith, the plates being supplied with lubricating oil for the cooling of the clutch, and the externally and internally toothed clutch plates (16, 22) being actuated by means of a hydraulic mechanism in order to produce a power flow between the engine and the transmission,
**characterized in that**,
- for starting of the motor vehicle, a drag torque is generated by virtue of oil being supplied in a targeted manner between the clutch discs (16, 22) of the at least partially open clutch, wherein
- an oil volume flow is generated such that a certain starting or drag torque is generated by means of an oil pressure built up in the clutch (2), and the oil volume flow is regulated independently of the operating state and the temperature of the clutch (2).

2. Method according to Claim 1, **characterized in that** the lubricating oil provided for cooling the plates (16, 22) is used for building up the drag torque.

3. Method according to Claim 1 or 2, **characterized in that**, to adapt the drag torque, the oil volume flow delivered between the clutch plates (16, 22) can be regulated.

4. Clutch device which can be arranged between an engine and a transmission, having a plurality of wet-running clutch discs (16, 22) which, in an alternating fashion as externally toothed and internally toothed plates or discs, are held on an inner and an outer plate carrier (10', 18') for conjoint rotation therewith, and also having a hydraulic mechanism (26') for actuating the clutch (2),
**characterized in that**,
furthermore, discs or plates (86, 88) are provided between the inner plate carrier and the outer plate carrier, which discs or plates are connected alternately to the two plate carriers (10', 18') for conjoint rotation therewith and are held spaced apart from one another independently of the operating state of the clutch and between which discs or plates oil can be delivered in order to generate a starting drag torque, wherein
the magnitude of the drag torque required as a function of the operating state of the motor vehicle can be adjusted by means of the control of the oil volume flow supplied to the plates (86, 88).

5. Clutch device according to Claim 4, **characterized in that** the externally toothed plates (88) are supported on the internally toothed plates (86) via spacers (94).

6. Clutch device according to Claim 4 or 5, **characterized in that** the internally toothed plates (86) are secured axially on the plate carrier (18') and are spaced apart from one another by spacer rings (90).

7. Clutch device according to one of Claims 4 to 6, **characterized in that** the internally toothed and externally toothed plates (86, 88) which are fixedly spaced apart from one another are formed as a separate structural unit.

## Revendications

1. Procédé pour faire fonctionner un embrayage à lamelles, qui est disposé entre le moteur et la transmission d'un véhicule automobile, comprenant plusieurs lamelles d'embrayage qui sont reçues de manière solidaire en rotation sur un support de lamelles intérieur ou extérieur (4, 10, 18) en alternance sous forme de lamelles ou de disques (16, 22) à dentures externes et internes, les lamelles étant alimentées en huile de lubrification pour refroidir l'embrayage, et les lamelles d'embrayage à dentures externes et internes (16, 22) étant actionnées pour créer un flux de force entre le moteur et la transmission par le biais d'un mécanisme hydraulique,
**caractérisé en ce que**
- pour le démarrage du véhicule automobile, un couple résistant est produit en effectuant une alimentation en huile ciblée entre les disques d'embrayage (16, 22) de l'embrayage au moins partiellement ouvert,
- un débit volumique d'huile étant ajusté de telle sorte qu'un couple de démarrage ou un couple résistant spécifique soit produit par une pression d'huile accumulée dans l'embrayage (2), et la régulation du débit volumique d'huile ayant lieu indépendamment de l'état de fonctionnement et de la température de l'embrayage (2).

2. Procédé selon la revendication 1, **caractérisé en ce que** pour la réalisation du couple résistant, on utilise l'huile de lubrification prévue pour le refroidissement des lamelles (16, 22).

3. Procédé selon la revendication 1 ou 2, **caractérisé en ce que** pour l'adaptation du couple résistant, le débit volumique d'huile refoulée entre les lamelles d'embrayage (16, 22) peut être régulé.

4. Dispositif d'embrayage pour un véhicule automobile, qui peut être disposé entre le moteur et la transmission, comprenant plusieurs disques d'embrayage du type humide (16, 22), qui sont reçus de manière solidaire en rotation sur un support de lamelles intérieur ou extérieur (10', 18') en alternance sous forme de lamelles ou de disques à dentures externes et internes, et comprenant un mécanisme hydraulique (26') pour l'actionnement de l'embrayage (2),
**caractérisé en ce que**
des disques ou des lamelles (86, 88) connectés en alternance de manière solidaire en rotation aux deux supports de lamelles (10', 18') sont prévus en outre entre les supports de lamelles intérieur et extérieur et sont maintenus à distance les uns des autres indépendamment de l'état de fonctionnement de l'embrayage, et de l'huile peut être refoulée entre ceux-ci pour produire un couple de démarrage ou un couple résistant ; l'amplitude du couple résistant requise en fonction de l'état de fonctionnement du véhicule automobile pouvant être ajustée par le biais de la commande du débit volumique d'huile acheminée aux lamelles (86, 88).

5. Dispositif d'embrayage selon la revendication 4, **caractérisé en ce que** les lamelles à dentures externes (88) s'appuient sur les lamelles à dentures internes (86) par le biais d'éléments d'espacement (94).

6. Dispositif d'embrayage selon la revendication 4 ou 5, **caractérisé en ce que** les lamelles à dentures internes (86) sont fixées axialement sur le support de lamelles (18') et sont espacées par des bagues d'espacement (90).

7. Dispositif d'embrayage selon l'une quelconque des revendications 4 à 6, **caractérisé en ce que** les lamelles (86, 88) à dentures internes et externes espacées fixement les unes des autres sont réalisées sous forme d'unité constructive séparée.
